# EUROPEAN PATENT APPLICATION

(11) **EP 4 104 651 A1**
(43) Date of publication of application: **21.12.2022**
(21) Application number: 22174143.2
(22) Date of filing: 18.05.2022
(51) Int. Cl.: A01B 1/00, A01B 69/04, A01M 7/00

(54) **AUTOMATIC TRAVELING METHOD, AUTOMATIC TRAVELING SYSTEM, AND AUTOMATIC TRAVELING PROGRAM**

(30) Priority: 31.05.2021 JP 2021091525
(71) Applicant: Yanmar Holdings Co., Ltd., Osaka-shi, Osaka (JP)
(72) Inventor: UENO, So, Osaka (JP)
(74) Representative: Novagraaf International SA

(57) **Abstract**

[Problem] To provide an automatic traveling method, an automatic traveling system, and an automatic traveling program, by which it is possible to improve the work efficiency of a work by a work vehicle traveling automatically.

[Solution] An automatic traveling method includes causing a work vehicle 10 to automatically travel according to a target route R in a farm field F, execute a spraying work of spraying a chemical liquid on crops V, execute a stirring work of stirring the chemical liquid in a storage tank 14A, and start the stirring work if a predetermined condition is satisfied before the work vehicle 10 starts automatic travel.

## Description

### TECHNICAL FIELD

The present invention relates to an automatic traveling method, an automatic traveling system, and an automatic traveling program, for causing a work vehicle to automatically travel according to a target route in a work area.

### BACKGROUND ART

There is known a work vehicle automatically traveling on a target route while spraying a chemical liquid on crops planted in a work area such as a farm field or an agricultural plantation (see, for example, Patent Document 1). The work vehicle sprays the chemical liquid accommodated in a storage tank on the crops while automatically traveling sequentially on a plurality of work routes where the crops are planted.

### PRIOR ART DOCUMENT

### PATENT DOCUMENT

Patent Document 1: Japanese Unexamined Patent Application Publication No. 2004-009027

### SUMMARY OF INVENTION

### TECHNICAL PROBLEM

Here, the chemical liquid is composed of a mixture of a chemical agent and a liquid (such as water), and thus, it is necessary to stir the chemical liquid charged into the storage tank. If the chemical liquid is not sufficiently stirred, the concentration of the chemical liquid may not be uniform, or a spraying nozzle for discharging the chemical liquid may be clogged, resulting in a problem that the work accuracy of the spraying work decreases. In particular, the above problem is remarkable at a work start time when the spraying work is started.

An object of the present invention relates to an automatic traveling method, an automatic traveling system, and an automatic traveling program, by which it is possible to improve the work accuracy of a spraying work by a work vehicle traveling automatically.

### SOLUTION TO PROBLEM

An automatic traveling method according to the present invention includes causing a work vehicle to automatically travel according to a target route in a work area, execute a spraying work of spraying a spraying material on a spray target, execute a stirring work of stirring the spraying material in a storage tank, and start the stirring work if a predetermined condition is satisfied before the work vehicle starts automatic travel.

An automatic traveling system according to the present invention includes a travel processing unit, a spraying processing unit, and a stirring processing unit. The travel processing unit causes a work vehicle to automatically travel according to a target route in a work area. The spraying processing unit causes the work vehicle to execute a spraying work of spraying a spraying material on a spray target. The stirring processing unit causes the work vehicle to execute a stirring work of stirring the spraying material in a storage tank. The stirring processing unit causes the work vehicle to start the stirring work if a predetermined condition is satisfied before the work vehicle starts automatic travel.

An automatic traveling program according to the present invention is a program for causing one or more processors to execute causing a work vehicle to automatically travel according to a target route in a work area, execute a spraying work of spraying a spraying material on a spray target, execute a stirring work of stirring the spraying material in a storage tank, and start the stirring work if a predetermined condition is satisfied before the work vehicle starts automatic travel.

### ADVANTAGEOUS EFFECTS OF INVENTION

According to the present invention, it is possible to provide an automatic traveling method, an automatic traveling system, and an automatic traveling program, by which it is possible to improve the work accuracy of a spraying work by a work vehicle traveling automatically.

### BRIEF DESCRIPTION OF DRAWINGS

FIG. 1 is a schematic diagram illustrating an entire configuration of an automatic traveling system according to an embodiment of the present invention.
FIG. 2 is a block diagram illustrating a configuration of the automatic traveling system according to the embodiment of the present invention.
FIG. 3 is an external view obtained when a work vehicle according to the embodiment of the present invention is viewed from a left front side.
FIG. 4A is an external view of a left side face obtained when the work vehicle according to the embodiment of the present invention is viewed from a left side.
FIG. 4B is an external view of a right side face obtained when the work vehicle according to the embodiment of the present invention is viewed from a right side.
FIG. 4C is an external view of a rear face obtained when the work vehicle according to the embodiment of the present invention is viewed from a rear face side.
FIG. 5 is a diagram illustrating an example of a crop row according to the embodiment of the present invention.
FIG. 6 is a diagram illustrating an example of a target route according to the embodiment of the present invention.
FIG. 7 is an external view of a storage tank according to the embodiment of the present invention.
FIG. 8 is a cross-sectional view of the storage tank according to the embodiment of the present invention.
FIG. 9 is a diagram illustrating a state in which a chemical liquid is supplied to the work vehicle according to the embodiment of the present invention.
FIG. 10 is an external view of a manual travel operation unit according to the embodiment of the present invention.
FIG. 11A is a diagram for explaining a method of generating a target route according to the embodiment of the present invention.
FIG. 11B is a diagram for explaining a method of generating the target route according to the embodiment of the present invention.
FIG. 12 is a flowchart illustrating an example of a procedure of an automatic traveling process executed by the automatic traveling system according to the embodiment of the present invention.

### DESCRIPTION OF EMBODIMENTS

The following embodiment is an example in which the present invention is embodied, and does not limit the technical scope of the present invention.

### [Automatic Traveling System 1]

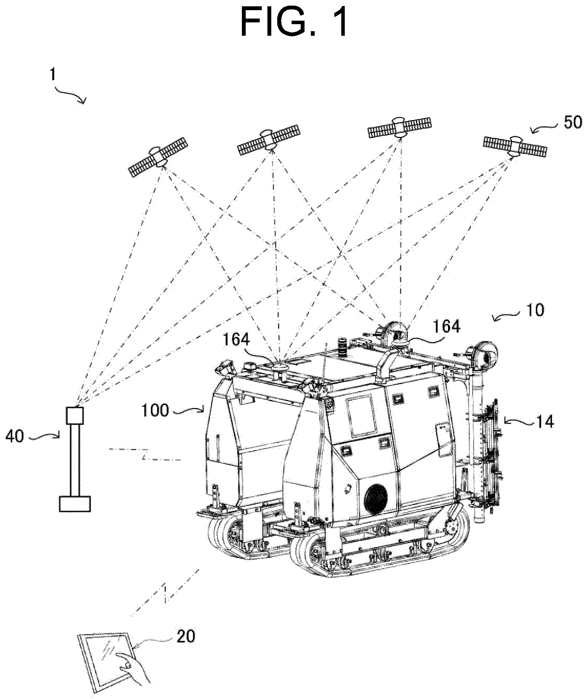

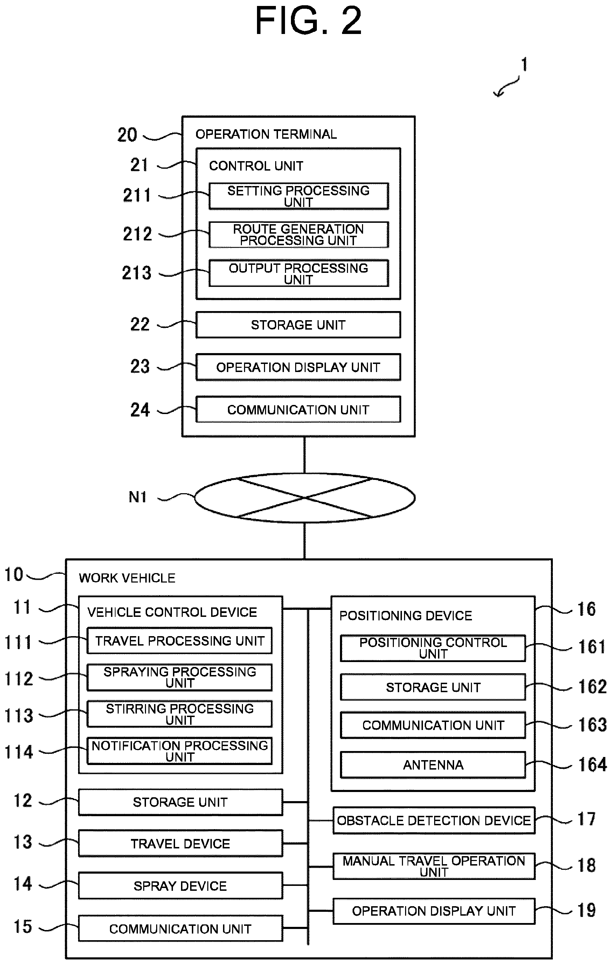

As illustrated in FIGS. 1 and 2, an automatic traveling system 1 according to the embodiment of the present invention includes a work vehicle 10, an operation terminal 20, a base station 40, and a satellite 50. The work vehicle 10 and the operation terminal 20 can communicate with each other via a communication network N1. For example, the work vehicle 10 and the operation terminal 20 can communicate via a mobile phone line network, a packet line network, or a wireless LAN.

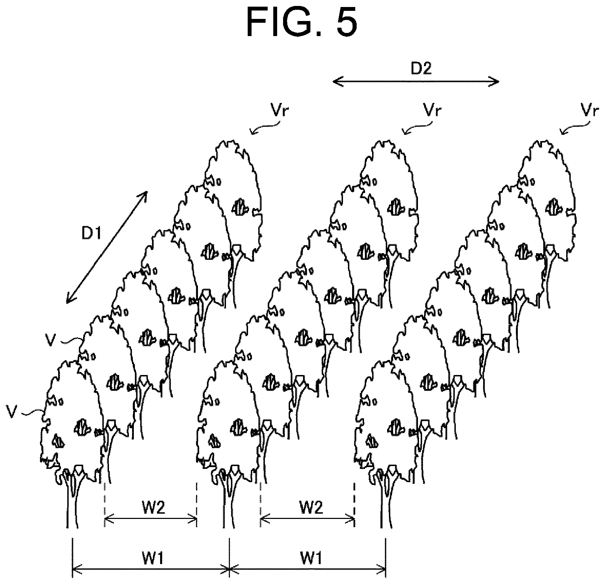

In the present embodiment, a case where the work vehicle 10 is a vehicle performing a spraying work of spraying a chemical liquid, water, or the like on crops V (see FIG. 5) planted in a farm field F will be described as an example. The farm field F is an example of a work area in the present invention, and the farm field F is, for example, an orchard such as a vineyard or an apple orchard. The crops V are, for example, grape trees. The spraying work is, for example, a work of spraying a spraying material such as a chemical liquid on the crops V.

The crops V are arranged in a plurality of rows at predetermined intervals in the farm field F. Specifically, as illustrated in FIG. 5, a plurality of the crops V are planted linearly in a predetermined direction (a D1 direction), and form a crop row Vr including the plurality of crops V arranged linearly. FIG. 5 illustrates three of the crop rows Vr. The crop rows Vr are arranged in a vertical direction (a D2 direction) at predetermined intervals W1. A region (space) of an interval W2 between adjacent ones of the crop rows Vr is a work passage where the work vehicle 10 performs a spraying work on the crops V while traveling in the D1 direction.

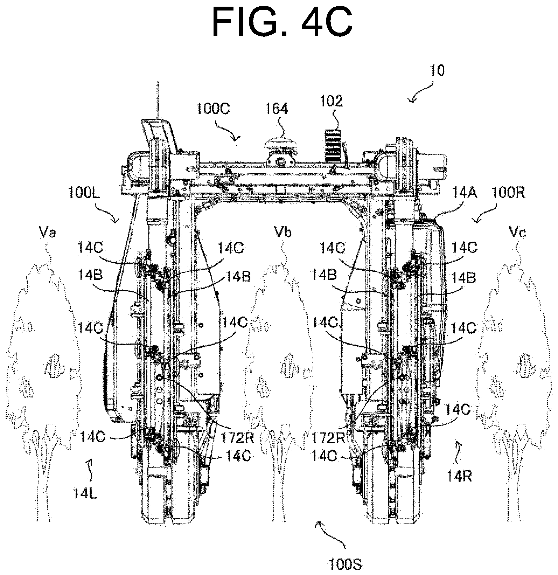

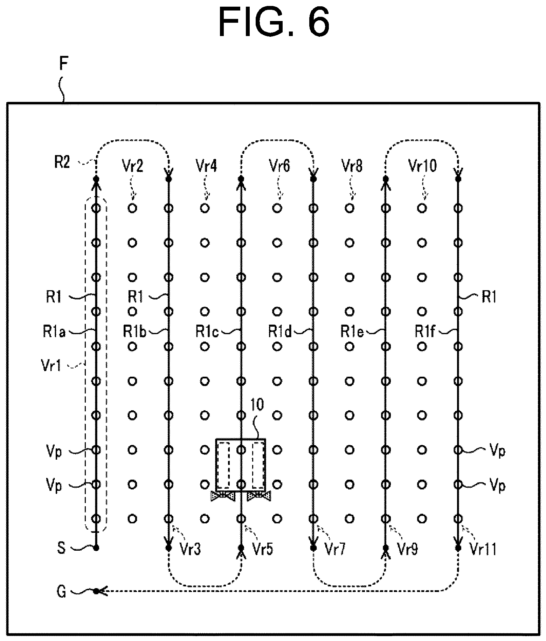

The work vehicle 10 is capable of traveling automatically (autonomously traveling) along a previously set target route R. For example, as illustrated in FIG. 6, the work vehicle 10 automatically travels from a work start position S to a work end position G along the target route R including a work route R1 (work routes R1a to R1f) and a movement route R2. The work start position S is an example of an automatic travel start position in the present invention. The work route R1 is a linear route on which the work vehicle 10 performs the spraying work on the crops V, and the movement route R2 is a route on which the work vehicle 10 moves between the crop rows Vr without performing the spraying work. The movement route R2 includes, for example, a turning route and a straight route. In the example illustrated in FIG. 6, the crops V composed of crop rows Vr1 to Vr11 are arranged in the farm field F. In FIG. 6, positions where the crops V are planted (crop positions) are represented by "Vp". In the work vehicle 10 traveling in the farm field F of FIG. 6, a vehicle body 100 has an inverted U-shape (see FIG. 4C), and while traveling in a state of spanning over one of the crop rows Vr, the work vehicle 10 sprays a chemical liquid on the crops V in the one crop row Vr and on the crop row Vr adjacent to the one crop row Vr. For example, as illustrated in FIG. 6, if the work vehicle 10 travels in a state of spanning over the crop row Vr5, a left-side vehicle body (a left-side part 100L) of the work vehicle 10 travels on a work passage between the crop rows Vr4 and Vr5, a right-side vehicle body (a right-side part 100R) of the work vehicle 10 travels on a work passage between the crop rows Vr5 and Vr6, and the work vehicle 10 sprays a chemical liquid on the crops V of the crop rows Vr4, Vr5, and Vr6.

The work vehicle 10 automatically travels in a predetermined row order. For example, the work vehicle 10 firstly travels across the crop row Vr1, next, travels across the crop row Vr3, and next, travels across the crop row Vr5. Thus, the work vehicle 10 automatically travels according to a preset order of the crop rows Vr. The work vehicle 10 may travel on each row in the order of arrangement of the crop rows Vr, or may travel in each of plurality of rows.

The satellite 50 is a positioning satellite configuring a satellite positioning system such as a global navigation satellite system (GNSS), and transmits a GNSS signal (satellite signal). The base station 40 is a reference point (reference station) configuring the satellite positioning system. The base station 40 transmits, to the work vehicle 10, correction information for calculating a current position of the work vehicle 10.

A positioning device 16 mounted in the work vehicle 10 executes a positioning process of calculating a current position (latitude and longitude) and a current orientation of the work vehicle 10 by utilizing the GNSS signal transmitted from the satellite 50. Specifically, the positioning device 16 positions the work vehicle 10 by utilizing a real time kinetic (RTK) method for positioning the work vehicle 10, based on positioning information (such as a GNSS signal) received by two receivers (an antenna 164 and the base station 40) and correction information generated by the base station 40. The positioning method is a well-known technique, and thus, detailed description thereof will be omitted.

Each constituent components configuring the automatic traveling system 1 will be described in detail below.

### [Work Vehicle 10]

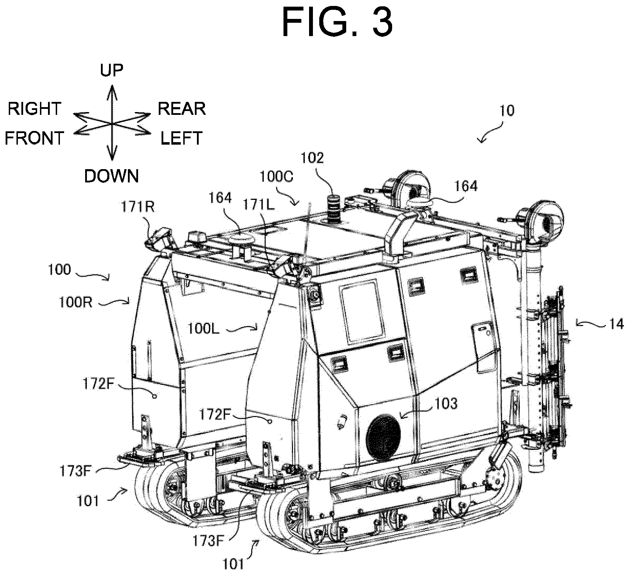

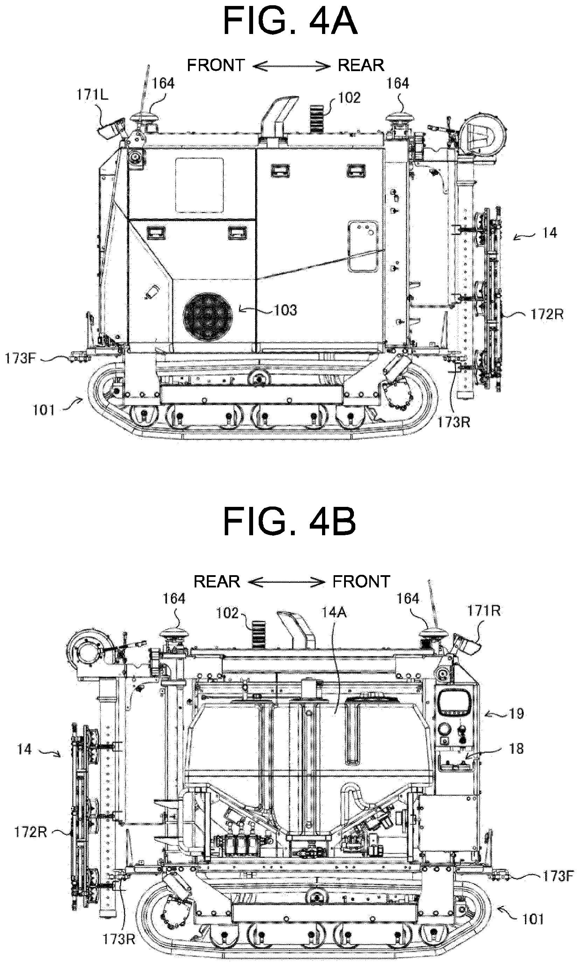

FIG. 3 is an external view obtained when the work vehicle 10 is viewed from a left front side. FIG. 4A is an external view of a left side face obtained when the work vehicle 10 is viewed from a left side, FIG. 4B is an external view of a right side face obtained when the work vehicle 10 is viewed from a right side, and FIG. 4C is an external view of a rear face obtained when the work vehicle 10 is viewed from a rear face side.

As illustrated in FIGS. 1 to 4, the work vehicle 10 includes a vehicle control device 11, a storage unit 12, a travel device 13, a spray device 14, a communication unit 15, a positioning device 16, and an obstacle detection device 17, for example. The vehicle control device 11 is electrically connected to the storage unit 12, the travel device 13, the spray device 14, the positioning device 16, and the obstacle detection device 17, for example. The vehicle control device 11 and the positioning device 16 may be capable of performing wireless communication.

The communication unit 15 is a communication interface for connecting the work vehicle 10 to the communication network N1 in a wired or wireless manner to execute data communication according to a predetermined communication protocol between the work vehicle 10 and an external device such as the operation terminal 20 via the communication network N1.

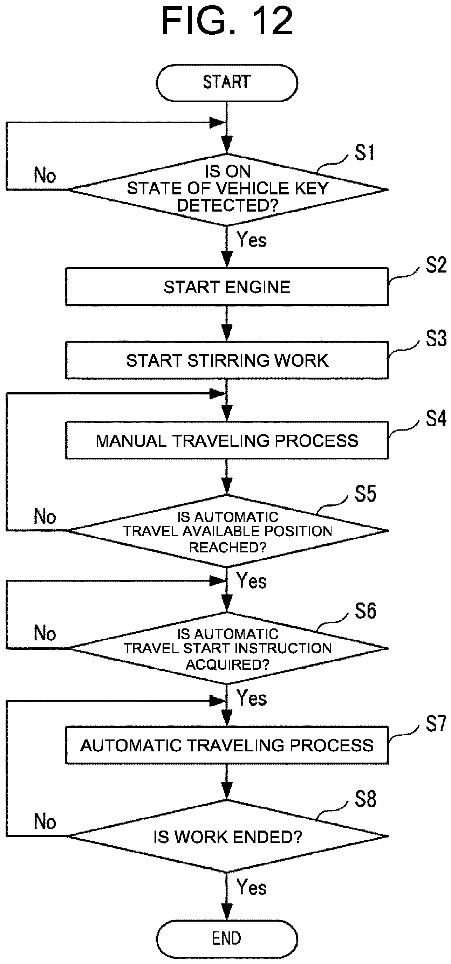

The storage unit 12 is a non-volatile storage unit such as a hard disk drive (HDD) or a solid state drive (SSD) that stores various types of information. The storage unit 12 stores a control program such as an automatic traveling program for causing the vehicle control device 11 to execute an automatic traveling process (see FIG. 12) described later. For example, the automatic traveling program is recorded non-temporarily on a computer-readable recording medium such as a CD or a DVD, and is read by a predetermined reading device (not illustrated) to be stored in the storage unit 12. The automatic traveling program may be downloaded from a server (not illustrated) to the work vehicle 10 via the communication network N1 to be stored in the storage unit 12. The storage unit 12 stores route data including information about the target route R generated by the operation terminal 20. For example, the route data is transferred from the operation terminal 20 to the work vehicle 10 to be stored in the storage unit 12.

The vehicle control device 11 includes a control device such as a CPU, a ROM, and a RAM The CPU is a processor that executes various types of arithmetic processes. The ROM is a non-volatile storage unit in which a control program such as BIOS and OS for causing the CPU to execute various types of arithmetic processes is stored in advance. The RAM is a volatile or non-volatile storage unit that stores various types of information, and is used as a temporary storage memory (working area) for various types of processes executed by the CPU. The vehicle control device 11 controls the work vehicle 10 by causing the CPU to execute various types of control programs stored in advance in the ROM or the storage unit 12.

The vehicle control device 11 controls the travel of the work vehicle 10. Specifically, as illustrated in FIG. 2, the vehicle control device 11 includes various types of processing units such as a travel processing unit 111, a spraying processing unit 112, a stirring processing unit 113, and a notification processing unit 114. The vehicle control device 11 functions as the various types of processing units by causing the CPU to execute various types of processes according to the control programs. Some or all of the processing units may be configured by an electronic circuit. The control programs may be programs for causing a plurality of processors to function as the processing units.

The travel processing unit 111 causes the work vehicle 10 to automatically travel along the target route R, based on positioning information including a position and an orientation of the work vehicle 10 positioned by the positioning device 16. For example, when the positioning state is a state where RTK positioning is possible and an operator depresses a start button (applies an automatic travel start instruction) on an operation screen of the operation terminal 20, the operation terminal 20 outputs the automatic travel start instruction (work start instruction) to the work vehicle 10. When acquiring the automatic travel start instruction from the operation terminal 20, the travel processing unit 111 causes the work vehicle 10 to start automatic travel, based on the positioning information of the work vehicle 10 positioned by the positioning device 16. Thus, the work vehicle 10 starts automatic travel along the target route R, and starts the spraying work by the spray device 14 in the work passage.

In another embodiment, the travel processing unit 111 may cause the work vehicle 10 to start automatic travel when the operator depresses a start button (automatic travel start instruction) on a remote operation controller (not illustrated) mounted in the work vehicle 10.

When acquiring a travel stop instruction from the operation terminal 20, the travel processing unit 111 causes the work vehicle 10 to stop the automatic travel. For example, if the operator depresses a stop button on the operation screen of the operation terminal 20, the operation terminal 20 outputs the travel stop instruction to the work vehicle 10. When acquiring the travel stop instruction from the operation terminal 20, the travel processing unit 111 causes the work vehicle 10 to stop the automatic travel. Thus, the work vehicle 10 stops the automatic travel and stops the spraying work by the spray device 14. The travel processing unit 111 may cause the work vehicle 10 to stop the automatic travel when the travel stop instruction is acquired from the remote operation controller. The travel processing unit 111 is an example of the travel processing unit in the present invention.

Here, the work vehicle 10 includes an inverted U-shaped vehicle body 100 that travels across the crops V (fruit trees) planted side by side in a plurality of rows in the farm field F. As illustrated in FIG. 4C, the vehicle body 100 is formed in an inverted U-shape by the left-side part 100L, the right-side part 100R, and a connection unit 100C connecting the left-side part 100L and the right-side part 100R, and a space 100S that allows the passage of the crops V is secured inside the left-side part 100L, the right-side part 100R, and the connection unit 100C.

A crawler 101 is provided below each of the left-side part 100L and the right-side part 100R of the vehicle body 100. The left-side part 100L is provided with an engine 103 (see FIG. 4A), a battery (not illustrated), and the like. The right-side part 100R is provided with a storage tank 14A (see FIG. 4B) of the spray device 14 and the like. Thus, if constitution components are arranged in a distributed manner in the left-side part 100L and the right-side part 100R of the vehicle body 100, a balance between the left and right sides and a low center of gravity are achieved in the work vehicle 10. Thus, the work vehicle 10 can stably travel on a slope or the like of the farm field F.

The travel device 13 is a drive unit that causes the work vehicle 10 to travel. The travel device 13 includes the engine 103, the crawler 101, and the like.

The left and right crawlers 101 are driven by power from the engine 103 in a state where independent transmission is possible by a hydrostatic continuously variable transmission device. Thus, when the left and right crawlers 101 are driven at a constant speed in the forward direction, the vehicle body 100 is in a forward-moving state of moving straight in the forward direction, and when the left and right crawlers 101 are driven at a constant speed in the backward direction, the vehicle body 100 is in a backward-moving state of moving straight in the backward direction. When the left and right crawlers 101 are driven at an irregular speed in the forward direction, the vehicle body 100 is in a forward-moving turning state of moving forward while turning, and when the left and right crawlers 101 are driven at an irregular speed in the backward direction, the vehicle body 100 is in a backward-moving turning state of moving backward while turning. When any one of the left and right crawlers 101 is stopped in drive, while the other one of the crawlers 101 is driven, the vehicle body 100 is in a pivot turning (pivot turn) state, and when the left and right crawlers 101 are driven at a constant speed in the forward direction and the backward direction, the vehicle body 100 is in a spin turning (neutral turn) state. When the left and right crawlers 101 is stopped in drive, the vehicle body 100 stops traveling. The left and right crawlers 101 may be electrically driven by an electric motor.

As illustrated in FIG. 4C, the spray device 14 includes the storage tank 14A for storing a chemical liquid and the like, spraying pipes 14B of which two are provided vertically and in parallel on each of the left and right side at the rear of the vehicle body 100, and a total of 12 spraying nozzles 14C of which three are provided in each of the spraying pipes 14B.

Each of the spraying nozzles 14C is changeably attached to the corresponding spraying pipe 14B to be vertically repositionable. Thereby, each of the spraying nozzles 14C can change a distance from an adjacent spraying nozzle 14C and a height position with respect to the spraying pipe 14B according to the targets (crops V) to be sprayed. Further, each of the spraying nozzles 14C is attached so that the height position and the left-right position with respect to the vehicle body 100 can be changed according to the targets to be sprayed.

In the spray device 14, the number of the spraying nozzles 14C provided in each of the spraying pipes 14B can be variously changed according to the type of crops V, the length of each of the spraying pipes 14B, and the like.

As illustrated in FIG. 4C, three spraying nozzles 14C provided on the leftmost spraying pipe 14B out of the plurality of spraying nozzles 14C spray the chemical liquid to the left toward a crop Va located on the leftward and outward of the vehicle body 100. Three spraying nozzles 14C provided on the left inner spraying pipe 14B adjacent to the leftmost spraying pipe 14B out of the plurality of spraying nozzles 14C spray the chemical liquid to the right toward a crop Vb located in the left and right central space 100S of the vehicle body 100. Three spraying nozzles 14C provided on the rightmost spraying pipe 14B out of the plurality of spraying nozzles 14C spray the chemical liquid to the right toward a crop Vc located on the rightward and outward of the vehicle body 100. Three spraying nozzles 14C provided on the right inner spraying pipe 14B adjacent to the rightmost spraying pipe 14B out of the plurality of spraying nozzles 14C spray the chemical liquid to the left toward the crop Vb located in the space 100S.

With the above configuration, in the spray device 14, the two spraying pipes 14B and the six spraying nozzles 14C provided on the left-side part 100L of the vehicle body 100 function as a left spraying unit 14L. Further, the two spraying pipes 14B and the six spraying nozzles 14C provided on the right-side part 100R of the vehicle body 100 function as a right spray portion 14R. The left and right spraying units 14L and 14R are provided with a horizontal interval allowing for passage of the crop Vb (the space 100S) between the left and right spraying units 14L and 14R in a state where the left and right spraying units 14L and 14R can spray the chemical liquid in the left-right direction on the rear of the vehicle body 100.

In the spray device 14, the spraying patterns of the spraying units 14L and 14R include a four-way spraying pattern in which each of the spraying units 14L and 14R sprays the chemical liquid in both the left and right directions, and a direction-restricted spraying pattern in which the spraying direction of the spraying units 14L and 14R is restricted. The direction-restricted spraying pattern includes a left-side three-way spraying pattern in which the spraying unit 14L sprays the chemical liquid in both the left and right directions and the spraying unit 14R sprays the chemical liquid only in the left direction, and a right-side three-way spraying pattern in which the spraying unit 14L sprays the chemical liquid only in the right direction and the spraying unit 14R sprays the chemical liquid in both the left and right directions, a two-way spraying pattern in which the spraying unit 14L sprays the chemical liquid only in the right direction and the spraying unit 14R sprays the chemical liquid only in the left direction, a left-side unidirectional spraying pattern in which the spraying unit 14L sprays the chemical liquid only in the left direction and the spraying unit 14R does not spray the chemical liquid, and a right-side unidirectional spraying pattern in which the spraying unit 14R sprays the chemical liquid only in the right direction and the spraying unit 14L does not spray the chemical liquid.

The spray device 14 executes a switching process of switching the spraying direction (spraying pattern) of the chemical liquid, based on control information included in the route data transferred from the operation terminal 20. That is, the spray device 14 functions as a spraying pattern switching processing unit.

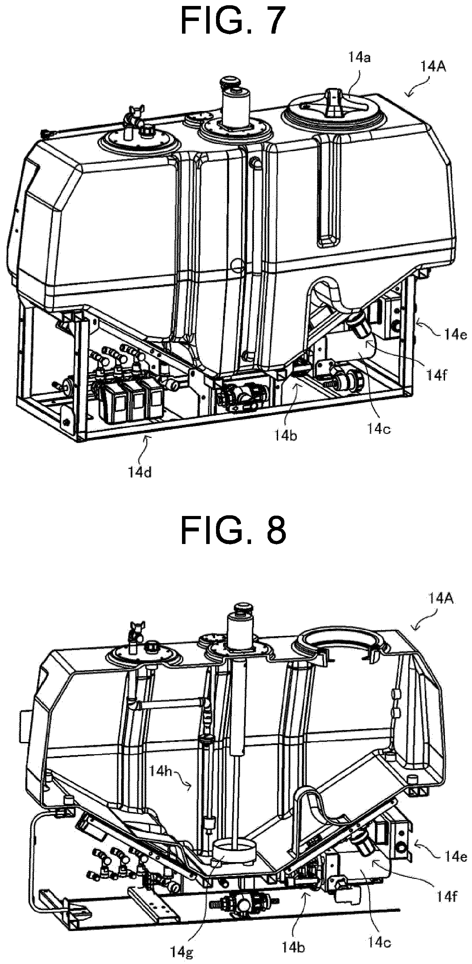

FIG. 7 illustrates an overall configuration of the storage tank 14A constituting the spray device 14, and FIG. 8 illustrates a cross-sectional view illustrating an internal configuration of the storage tank 14A.

A lid 14a is provided on the storage tank 14A, and the lid 14a is removed to supply (fill) a chemical liquid into the storage tank 14A. The storage tank 14A includes a spraying pump 14b that pumps the chemical liquid, an electric spraying motor 14c that drives the spraying pump 14b, an electronically controlled valve unit 14d that changes a spraying amount and a spraying pattern of the chemical liquid, and a plurality of spraying pipes (not illustrated) that connects these components, and the like. The storage tank 14A is provided with a flow rate adjusting unit 14e that adjusts a rotation speed of the spraying motor 14c to adjust a flow rate of the chemical liquid pumped from the spraying pump 14b, a flow rate sensor 14f that detects the flow rate of the chemical liquid pumped from the spraying pump 14b, and the like. As illustrated in FIG. 8, the storage tank 14Ais provided with a stirring unit 14g that stirs the chemical liquid in the storage tank 14A, a remaining amount sensor 14h that detects a remaining amount of the chemical liquid in the storage tank 14A, and the like. The stirring unit 14g performs a stirring work (rotational drive) according to a command of the vehicle control device 11, if a predetermined condition is satisfied before the work vehicle 10 starts automatic travel, which will be described in detail later.

The vehicle body 100 is equipped with an automatic travel control unit that causes the vehicle body 100 to automatically travel following the target route R of the farm field F, based on the positioning information and the like acquired from the positioning device 16, an engine control unit that controls the engine 103, a hydro-static transmission (HST) control unit that controls the hydrostatic continuously variable transmission device, and a work device control unit that controls a work device such as the spray device 14. Each control unit is constructed by an electronic control unit equipped with a microcontroller and the like, various types of information and control programs stored in a non-volatile memory (for example, an EEPROM such as a flash memory) of the microcontroller, and the like. The various types of information stored in the non-volatile memory may include the target route R generated in advance or the like. In the present embodiment, the control units are collectively referred to as the "vehicle control device 11" (see FIG. 2).

The positioning device 16 is a communication device including a positioning control unit 161, a storage unit 162, a communication unit 163, the antenna 164, and the like. The antenna 164 is provided in front of and behind a roof (the connection unit 100C) of the vehicle body 100 (see FIG. 3). The roof of the vehicle body 100 is provided with an indication lamp 102 or the like for indicating a travel state of the work vehicle 10 (see FIG. 3). The battery is connected to the positioning device 16, so that the positioning device 16 can operate even when the engine 103 is stopped.

The communication unit 163 is a communication interface for connecting the positioning device 16 to the communication network N1 in a wired or wireless manner to execute data communication, according to a predetermined communication protocol, between the communication unit 163 and an external device such as the base station 40 via the communication network N1.

The antenna 164 is an antenna that receives radio waves (GNSS signals) transmitted from satellites. Since the antenna 164 is provided at the front and rear parts of the work vehicle 10, the current position and the current orientation of the work vehicle 10 can be accurately positioned.

The positioning control unit 161 is a computer system including one or more processors and a storage memory such as a non-volatile memory and a RAM. The storage unit 162 is a control program for causing the positioning control unit 161 to execute the positioning process, and a non-volatile memory for storing data such as positioning information and movement information. The positioning control unit 161 positions the current position and the current orientation of the work vehicle 10 by a predetermined positioning method (RTK method or the like) based on the GNSS signal received from the satellite 50 by the antenna 164.

The obstacle detection device 17 includes a LiDAR sensor 171L provided on the front and left side of the vehicle body 100 and a LiDAR sensor 171R provided on the front and right side of the vehicle body 100 (see FIG. 3). Each LiDAR sensor measures a distance from the LiDAR sensor to each ranging point (measurement target) in the measurement range by a time of flight (TOF) method for measuring the distance to the ranging point, based on a round-trip time required by laser light input to the LiDAR sensor to reach the ranging point and return to the LiDAR sensor, for example.

The LiDAR sensor 171L has a predetermined range on the front and left side of the vehicle body 100 set as a measurement range, and the LiDAR sensor 171R has a predetermined range on the front and right side of the vehicle body 100 set as a measurement range. Each LiDAR sensor transmits measurement information such as the measured distance to each ranging point and the scanning angle (coordinates) for each ranging point to the vehicle control device 11.

Further, the obstacle detection device 17 includes left and right ultrasonic sensors 172F (see FIG. 3) provided on the front side of the vehicle body 100 and left and right ultrasonic sensors 172R (see FIGS. 4A to 4C) provided on the rear side of the vehicle body 100. Each ultrasonic sensor measures a distance from the ultrasonic sensor to a measurement target by the TOF method for measuring a distance to a ranging point, based on a round-trip time from when an ultrasonic wave is transmitted by the ultrasonic sensor to reach the ranging point to when the ultrasonic wave returns.

The ultrasonic sensor 172F on the front and left side has a predetermined range on the front and left side of the vehicle body 100 set as the measurement range, the ultrasonic sensor 172F on the front and right side has the predetermined range on the front and right side of the vehicle body 100 set as the measurement range, the ultrasonic sensor 172R on the rear and left side has a predetermined range on the rear and left side of the vehicle body 100 set as the measurement range, and the ultrasonic sensor 172R on the rear and right side has the predetermined range on the rear and right side of the vehicle body 100 set as the measurement range. Each ultrasonic sensor transmits measurement information including the distance to the measurement target and the direction of the object to be measured to the vehicle control device 11.

Further, the obstacle detection device 17 includes left and right contact sensors 173F (see FIG. 3) provided on the front side of the vehicle body 100 and left and right contact sensors 173R (see FIGS. 4A and 4B) provided on the rear side of the vehicle body 100. The contact sensor 173F on the front side of the vehicle body 100 detects an obstacle when an obstacle comes into contact with the contact sensor 173F. The spray device 14 is provided in front of the contact sensor 173R on the rear side of the vehicle body 100 (rear side of the work vehicle 10), and when an obstacle comes into contact with the spray device 14, the contact sensor 173R detects the obstacle by the spray device 14 moving to the rear (toward the front side of the work vehicle 10). Each contact sensor transmits a detection signal to the vehicle control device 11 when an obstacle is detected.

The vehicle control device 11 executes an avoidance process for avoiding an obstacle when the work vehicle 10 may collide with the obstacle based on the measurement information about the obstacle acquired from the obstacle detection device 17.

The spraying processing unit 112 of the vehicle control device 11 causes the spray device 14 to execute a spraying work. Specifically, when the work vehicle 10 starts automatic travel at the work start position S (see FIG. 6), the spraying processing unit 112 outputs, to the spray device 14, a switching signal for switching the spraying pattern, based on the control information included in the route data. When receiving the switching signal, the spray device 14 executes the spraying work in a predetermined spraying pattern. The spraying processing unit 112 is an example of a spraying processing unit in the present invention.

The stirring processing unit 113 of the vehicle control device 11 causes the stirring unit 14g (see FIG. 8) to execute a stirring work for stirring the chemical liquid in the storage tank 14A. Specifically, the stirring processing unit 113 outputs a drive signal to a drive motor (not illustrated) that drives the stirring unit 14g, to rotationally drive the stirring unit 14g. By rotationally driving the stirring unit 14g, the chemical liquid in the storage tank 14A is stirred. The stirring unit 14g is rotationally driven at a previously set rotation speed.

However, if a chemical agent and a liquid forming the chemical liquid in the storage tank 14A are not sufficiently mixed at a time when the work vehicle 10 starts the work, a concentration of the chemical liquid may not be uniform or the spraying nozzles 14C may be clogged, resulting in a problem that the work accuracy of the spraying work decreases. On the other hand, the work vehicle 10 according to the present embodiment can improve the work accuracy of the spraying work by starting the stirring work before the work vehicle 10 starts the automatic travel.

Specifically, the stirring processing unit 113 starts the stirring work if a predetermined condition is satisfied before the work vehicle 10 starts the automatic travel. For example, the stirring processing unit 113 starts the stirring work when the predetermined condition is satisfied before the work vehicle 10 reaches the work start position S set in advance. The stirring processing unit 113 is an example of a stirring processing unit in the present invention.

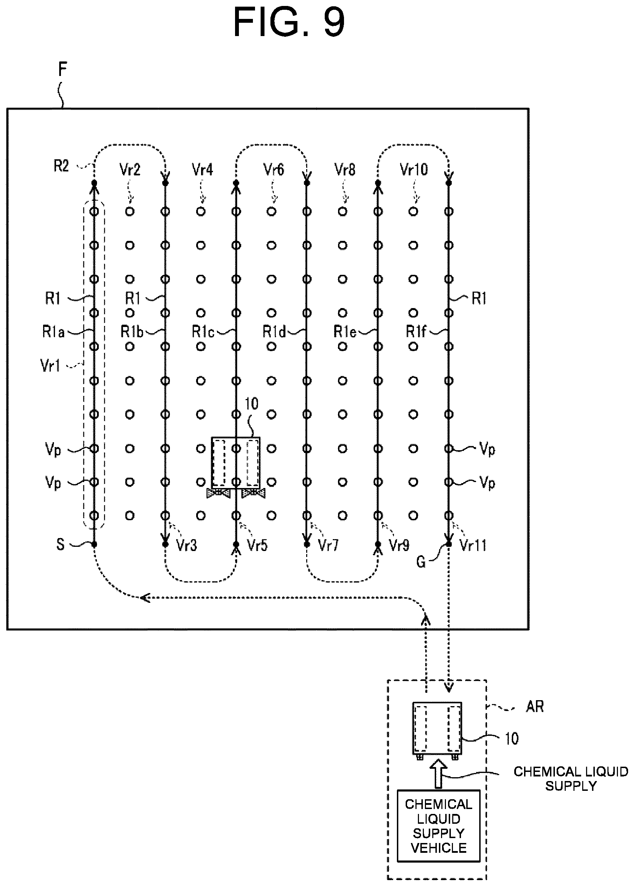

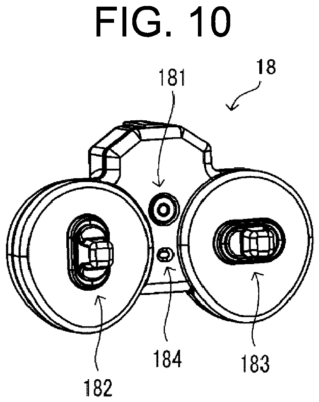

Here, the work vehicle 10 is supplied with a chemical liquid from a chemical liquid supply vehicle in a chemical liquid supply area AR outside the farm field F. For example, as illustrated in FIG. 9, the operator moves the work vehicle 10 to a position next to the chemical liquid supply vehicle in the chemical liquid supply area AR to charge (supply) the chemical liquid from the chemical liquid supply vehicle into the storage tank 14A. The work vehicle 10 supplied with the chemical liquid manually travels to the work start position S by an operation of the operator. For example, the operator operates a manual travel operation unit 18 (see FIG. 4B) provided in the work vehicle 10 to cause the work vehicle 10 to travel. FIG. 10 illustrates an outer appearance of the manual travel operation unit 18. The manual travel operation unit 18 includes a power switch 181 for activating a manual travel mode, an operation switch 182 for causing the work vehicle 10 to travel forward and backward, an operation switch 183 for causing the work vehicle 10 to turn right and left, and an LED 184 that turns on when the manual travel mode is activated. The manual travel operation unit 18 is connected to the vehicle control device 11 of the work vehicle 10 via a communication cable (not illustrated). The vehicle control device 11 causes the work vehicle 10 to travel in response to an operation on the manual travel operation unit 18. For example, when supply of the chemical liquid to the work vehicle 10 is completed, the operator switches the power switch 181 of the manual travel operation unit 18 to an ON state and operates the operation switches 182 and 183 to cause the work vehicle 10 to travel to the work start position S (see FIG. 9). When the work vehicle 10 reaches the work start position S and satisfies a condition for starting automatic travel, the work vehicle 10 starts automatic travel according to a target route corresponding to the route data.

The predetermined condition is a condition for starting the stirring work, and any one condition of a plurality of conditions illustrated below is set in the work vehicle 10. First to fourth conditions will be described below as examples of the predetermined condition.

### (First Condition)

The first condition is that "a key switch for starting the engine 103 (see FIG. 4A) of the work vehicle 10 is in an ON state". Specifically, the stirring processing unit 113 starts the stirring work when the key switch (for example, an engine key switch) for starting the engine 103 of the work vehicle 10 is in the ON state. For example, the operator transports the work vehicle 10 from a storehouse (such as a barn) to a predetermined position by utilizing a transport vehicle, and switches an engine start switch to an ON state by the engine key. The vehicle control device 11 starts the engine 103, and the stirring processing unit 113 starts to rotationally drive the stirring unit 14g. Thus, the chemical liquid in the storage tank 14A is stirred. Subsequently, the operator operates the manual travel operation unit 18 to unload the work vehicle 10 from the transport vehicle. When the operator unloads the work vehicle 10 from the transport vehicle, the operator performs a predetermined operation such as registration of work information by the operation terminal 20, and then, operates the manual travel operation unit 18 to move the work vehicle 10 to the work start position S. The work vehicle 10 stirs the chemical liquid in the storage tank 14A while manually traveling.

If a predetermined amount of the chemical liquid does not remain in the storage tank 14A when the work vehicle 10 is unloaded from the transport vehicle, the operator moves the work vehicle 10 to the chemical liquid supply area AR and supplies the chemical liquid from the chemical liquid supply vehicle to the storage tank 14A (see FIG. 9). Subsequently, the operator operates the manual travel operation unit 18 to move the work vehicle 10 to the work start position S. Information regarding the remaining amount of the chemical liquid in the storage tank 14A may be displayed on the operation terminal 20.

According to the first condition, stirring work can be started when the engine 103 of the work vehicle 10 is started.

### (Second Condition)

The second condition is that "the chemical liquid is already supplied to the storage tank 14A". Specifically, the stirring processing unit 113 starts the stirring work when the chemical liquid is already supplied to the storage tank 14A. For example, the stirring processing unit 113 does not drive the stirring unit 14g when the storage tank 14A does not contain the chemical liquid, but drives the stirring unit 14g when the chemical liquid is supplied (filled) to the storage tank 14A. For example, the stirring processing unit 113 recognizes that the chemical liquid is already supplied to the storage tank 14A, based on a detection result of the remaining amount sensor 14h (see FIG. 8), and starts to rotationally drive the stirring unit 14g.

According to the second condition, the stirring work can be started when the chemical liquid is already supplied to the storage tank 14A. Further, it is possible to prevent an unnecessary rotation operation of the stirring unit 14g.

### (Third Condition)

The third condition is that "the power switch 181 (see FIG. 10) of the manual travel operation unit 18 for causing the work vehicle 10 to manually travel to the work start position S is in an ON state". Specifically, the stirring processing unit 113 starts the stirring work when the power switch 181 of the manual travel operation unit 18 is in the ON state. For example, when the operator switches the power switch 181 of the manual travel operation unit 18 to the ON state when the work vehicle 10 is unloaded from the transport vehicle, the stirring processing unit 113 starts to rotationally drive the stirring unit 14g.

According to the third condition, the stirring work can be started when the operator starts the manual travel of the work vehicle 10.

### (Fourth Condition)

The fourth condition is that "the work vehicle 10 is connected to an external power source". Specifically, the stirring processing unit 113 starts the stirring work when the work vehicle 10 is connected to the external power source. For example, when the work vehicle 10 is connected to a power source (such as a battery) mounted in the transport vehicle that transports the work vehicle 10, the stirring processing unit 113 utilizes the power source to start the stirring work.

According to the fourth condition, the chemical liquid in the storage tank 14A can be stirred even during the transport of the work vehicle 10.

As described above, the stirring processing unit 113 starts the stirring work, when a previously set condition among the first condition, the second condition, the third condition, and the fourth condition is satisfied before the work vehicle 10 starts automatic travel. For example, the operator can select and set any one condition of the first condition, the second condition, the third condition, and the fourth condition on the operation terminal 20. The operator may be able to change the set condition to another condition.

Here, when the obstacle detection device 17 detects an obstacle while the work vehicle 10 travels automatically after automatic travel of the work vehicle 10 is started, the vehicle control device 11 temporarily stops the travel of the work vehicle 10. In this case, if the stirring unit 14g also stops, the concentration of the chemical liquid in the storage tank 14A may be non-uniform. Therefore, when the work vehicle 10 detects an obstacle and stops during automatic travel, the stirring processing unit 113 continues the stirring work without stopping. Thus, even after the automatic travel of the work vehicle 10 is resumed, it is possible to spray a chemical liquid having a uniform concentration. As described above, the stirring processing unit 113 continuously executes the stirring work while the work vehicle 10 travels from the work start position S to the work end position G.

The notification processing unit 114 of the vehicle control device 11 causes at least one of an operation display unit 19 mounted in the work vehicle 10 and the operation terminal 20 to display a work status of the stirring work. As illustrated in FIG. 4B, the operation display unit 19 including a display unit (a display panel) and an operation unit (an operation switch) is provided on the front side of the right-side vehicle body (the right-side part 100R) of the work vehicle 10. The operation display unit 19 may be a touch panel in which the display unit and the operation unit are integrally formed. For example, the notification processing unit 114 causes the display unit to display information indicating a status of the stirring work, that is, information indicating whether the stirring work is performed.

In another embodiment, the notification processing unit 114 may notify the operation terminal 20 of the status of the stirring work, and cause the operation display unit 23 of the operation terminal 20 to display information indicating whether the stirring work is performed. Thus, the operator can easily grasp whether the chemical liquid in the storage tank 14Ais stirred.

In another embodiment, the operation display unit 19 may be able to receive a start operation of the stirring work from the operator. When the operation display unit 19 receives the start operation of the stirring work, the stirring processing unit 113 may start the stirring work. According to this configuration, the operator can start the stirring work at a desired timing. For example, the operator can start the stirring work at a desired timing before the set condition is satisfied.

The above-described configuration of the work vehicle 10 is an example of the configuration of the work vehicle in the present invention, and the present invention is not limited to the above-described configuration. In another embodiment, the vehicle body 100 of the work vehicle 10 may have a general shape instead of the inverted U-shape, so that the vehicle body 100 entirely travels between the crop rows Vr (work passage). In this case, the work vehicle 10 automatically travels sequentially in each work passage without spanning over the crop rows Vr. The spray device 14 is provided with one spraying unit and performs a spraying work while switching between a spraying pattern in which the chemical liquid is sprayed in both left and right directions, a spraying pattern in which the chemical liquid is sprayed only in the left direction, and a spraying pattern in which the chemical liquid is sprayed only in the right direction.

### [Operation Terminal 20]

As illustrated in FIG. 2, the operation terminal 20 is an information processing device including a control unit 21, a storage unit 22, an operation display unit 23, and a communication unit 24. The operation terminal 20 may be composed of a mobile terminal such as a tablet terminal or a smartphone.

The communication unit 24 is a communication interface for connecting the operation terminal 20 to the communication network N1 in a wired or wireless manner to execute data communication according to a predetermined communication protocol between the operation terminal 20 and an external device such as one or more work vehicles 10 via the communication network N1.

The operation display unit 23 is a user interface including a display unit such as a liquid crystal display or an organic EL display that displays various types of information, and an operation unit such as a mouse, a keyboard, or a touch panel that receives an operation. On the operation screen displayed on the display unit, the operator can operate the operation unit to register various types of information (work vehicle information, farm field information, work information, etc., which will be described later). Further, the operator can operate the operation unit to give a work start instruction, a travel stop instruction, and the like to the work vehicle 10. At a place away from the work vehicle 10, the operator is capable of grasping the travel state, a work situation, and a surrounding situation of the work vehicle 10 automatically traveling according to the target route R within the farm field F, based on a travel trajectory displayed on the operation terminal 20 and a surrounding image of the vehicle body 100.

The storage unit 22 is a non-volatile storage unit, such as an HDD or an SSD that stores various types of information. The storage unit 22 stores a control program such as an automatic traveling program for causing the control unit 21 to execute an automatic traveling process (see FIG. 12) described later. For example, the automatic traveling program is recorded non-temporarily on a computer-readable recording medium such as a CD or a DVD, and is read by a predetermined reading device (not illustrated) to be stored in the storage unit 22. The automatic traveling program may be downloaded from a server (not illustrated) to the operation terminal 20 via the communication network N1 and stored in the storage unit 22.

The control unit 21 includes control devices such as a CPU, a ROM, and a RAM The CPU is a processor that executes various types of arithmetic processes. The ROM is a non-volatile storage unit in which a control program such as BIOS and OS for causing the CPU to execute various types of arithmetic processes is stored in advance. The RAM is a volatile or non-volatile storage unit that stores various types of information, and is used as a temporary storage memory (working area) for various types of processes executed by the CPU. The control unit 21 controls the operation terminal 20 by causing the CPU to execute various types of control programs stored in advance in the ROM or the storage unit 22.

As illustrated in FIG. 2, the control unit 21 includes various types of processing units such as a setting processing unit 211, a route generation processing unit 212, and an output processing unit 213. The control unit 21 functions as the various types of processing units by causing the CPU to execute various types of processes according to the control programs. Some or all of the processing units may be configured by an electronic circuit. The control programs may be programs for causing a plurality of processors to function as the processing units.

The setting processing unit 211 sets and registers information on the work vehicle 10 (hereinafter referred to as work vehicle information), information on the farm field F (hereinafter referred to as farm field information), and information on work (here, a spraying work) (hereinafter, work information).

In the setting process of the work vehicle information, the setting processing unit 211 sets information about the model of the work vehicle 10, the position where the antenna 164 is attached in the work vehicle 10, kinds of the work machine (here, the spraying device 14), the size and the shape of the work machine, the position of the work machine relative to the work vehicle 10, a vehicle speed and an engine RPM of the work vehicle 10 during working, a vehicle speed and an engine RPM of the work vehicle 10 during turning, and the like as a result of the operator operating for registering such information on the operation terminal 20. In the present embodiment, information about the spray device 14 is set as the information of the working machine.

In the setting process of the farm field information, the setting processing unit 211 sets information about the position and the shape of the farm field F, the work start position S to start the work and the work end position G to end the work (see FIG. 6), a working direction, and the like, as a result of the operator operating for registering such information on the operation terminal 20. The working direction means a direction in which the work vehicle 10 travels while performing the spraying work by the spray device 14 in the working area which is the area excluding the non-work region such as the headland from the farm field F.

It is possible to automatically obtain the information about the position and the shape of the farm field F when the operator manually causes the work vehicle 10 to encircle along the outer perimeter of the farm field F, for example, and a transition of the position information of the antenna 164 at that time is recorded. It is also possible to obtain the position and the shape of the farm field F, based on a polygon obtained by the operator operating the operation terminal 20 in a state where a map is displayed on the operation terminal 20 and designating a plurality of points on the map. A region designated by the obtained position and shape of the farm field F is a region (travel region) where the work vehicle 10 can travel.

In the setting process of the work information, as the work information, the setting processing unit 211 is configured to be set with a skipped number being the number of work routes to be skipped if the work vehicle 10 turns in the headland, a width of the headland, and the like.

The route generation processing unit 212 generates a target route R being a route on which the work vehicle 10 automatically travels, based on each of the setting information. The target route R is, for example, a route from the work start position S to the work end position G (see FIG. 6). The target route R illustrated in FIG. 6 includes a linear work route R1 for spraying the chemical liquid to the crop V in the region where the crop V is planted, and a movement route R2 for moving between the crop rows Vr without performing the spraying work.

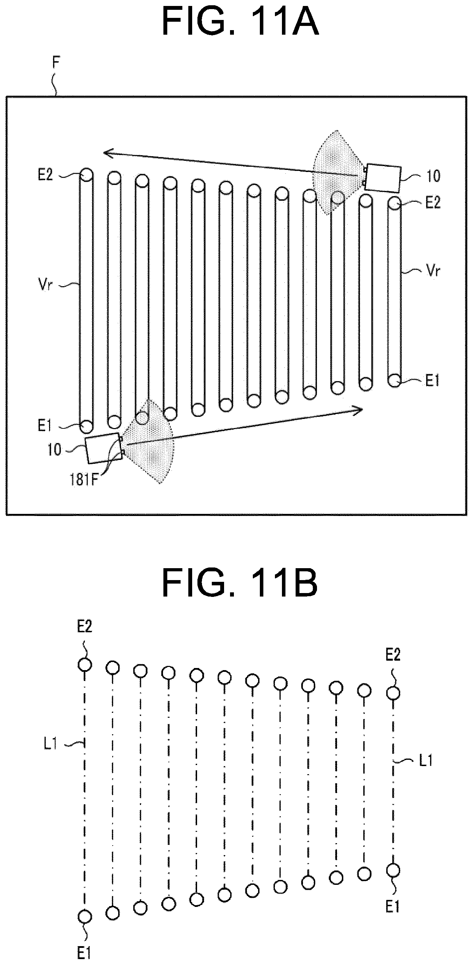

An example of a method of generating the target route R will be described with reference to FIGS. 11A and 11B. FIG. 11A schematically illustrates the crop rows Vr. Firstly, the operator causes the work vehicle 10 to manually travel along the outer perimeter of the crop rows Vr (see FIG. 11A). While traveling, the work vehicle 10 detects end points E1 on one side (lower side in FIG. 11A) and end points E2 on the other side (upper side in FIG. 11A) of the crop rows Vr, and acquires position information (coordinates) of each of the end points E1 and E2. The end points E1 and E2 may be positions of crops V that are already planted, or may be positions of target objects indicating positions of crops V that are to be planted. When acquiring the position information (coordinates) of each of the end points E1 and E2 from the work vehicle 10, the route generation processing unit 212 sets lines L1 (see FIG. 11B) connecting corresponding ones of the end points E1 and E2 as work routes of the crop rows Vr to generate the target route R including a plurality of the work routes and movement routes (turning routes). The method of generating the target route R is not limited to the method described above. The route generation processing unit 212 may store the generated target route R into the storage unit 22.

The output processing unit 213 outputs, to the work vehicle 10, route data including information about the target route R generated by the route generation processing unit 212.

The output processing unit 213 may output the route data to a server (not illustrated). The server stores and manages a plurality of the route data acquired from each of the plurality of operation terminals 20 in association with the operation terminal 20 and the work vehicle 10.

In addition to the above-described processes, the control unit 21 executes a process of causing the operation display unit 23 to display various types of information. For example, the control unit 21 causes the operation display unit 23 to display a registration screen for registering work vehicle information, farm field information, work information, and the like, an operation screen for generating the target route R, an operation screen for causing the work vehicle 10 to start automatic travel, a display screen for displaying a travel state of the work vehicle 10, and the like. For example, when the work status of the stirring work is acquired from the work vehicle 10, the control unit 21 causes the operation display unit 23 to display information indicating the work status, that is, information indicating whether the stirring work of the chemical liquid in the storage tank 14Ais performed.

Further, the control unit 21 receives various types of operations from the operator. Specifically, the control unit 21 receives a work start instruction from the operator to cause the work vehicle 10 to start a work, a travel stop instruction to stop the traveling of the work vehicle 10 traveling automatically, and the like. When the control unit 21 receives each of the instructions, the control unit 21 outputs each of the instructions to the work vehicle 10.

When the vehicle control device 11 of the work vehicle 10 acquires the work start instruction from the operation terminal 20, the vehicle control device 11 starts the automatic traveling and a spraying work of the work vehicle 10. When the vehicle control device 11 acquires the travel stop instruction from the operation terminal 20, the vehicle control device 11 stops the automatic traveling and spraying work of the work vehicle 10.

The operation terminal 20 may be accessible to the website (agricultural support site) of the agricultural support service provided by the server via the communication network N1. In this case, the operation terminal 20 is capable of functioning as an operation terminal of the server as a result of the browser program being executed by the control unit 21.

### [Automatic Traveling Process]

An example of the automatic traveling process executed by the vehicle control device 11 of the work vehicle 10 will be described below with reference to FIG. 12.

The present invention may be regarded as an invention of an automatic traveling method in which one or more steps included in the automatic traveling process are executed. Further, one or more steps included in the automatic traveling process described herein may be omitted where appropriate. In addition, the steps in the automatic traveling process may be executed in a different order as long as a similar operation and effect are obtained. Here, a case where each of the steps in the automatic traveling process is executed by the vehicle control device 11 is described by way of example. However, another embodiment may be an automatic traveling method in which the steps in the automatic traveling process are executed in a distributed manner by one or more processors.

Here, among the first to fourth conditions, the first condition that is a start condition of the stirring work, will be described as an example.

In step S1, the vehicle control device 11 determines whether the key switch (engine key switch) for starting the engine 103 of the work vehicle 10 is in the ON state. For example, the operator transports the work vehicle 10 from a storehouse to a predetermined position by utilizing a transport vehicle, and switches an engine start switch to the ON state by the engine key. When the vehicle control device 11 detects the ON state of the key switch (S1: Yes), the processing proceeds to step S2. The vehicle control device 11 waits until the key switch is in the ON state (S1: No).

In step S2, the vehicle control device 11 starts the engine 103. Subsequently, in step S3, the vehicle control device 11 starts the stirring work. Specifically, the vehicle control device 11 starts to rotationally drive the stirring unit 14g (see FIG. 8) to stir the chemical liquid in the storage tank 14A.

Next, in step S4, the vehicle control device 11 causes the work vehicle 10 to manually travel to the work start position S. For example, the vehicle control device 11 causes the work vehicle 10 to manually travel to the work start position S, based on a travel instruction operation of the manual travel operation unit 18 (see FIG. 10) by the operator.

Here, when the chemical liquid is supplied to the work vehicle 10 after starting the stirring work, the operator operates the manual travel operation unit 18 to move the work vehicle 10 to the chemical liquid supply area AR, and the chemical liquid is supplied from the chemical liquid supply vehicle to the storage tank 14A. Subsequently, the operator operates the manual travel operation unit 18 to move the work vehicle 10 to the work start position S (see FIG. 9). If no chemical liquid remains in the storage tank 14A, the vehicle control device 11 may start the stirring work when the vehicle control device 11 detects that the chemical liquid in the storage tank 14A is already supplied (corresponding to the second condition).

Next, in step S5, the vehicle control device 11 determines whether the work vehicle 10 reaches the work start position S (a position enabling automatic travel). If the work vehicle 10 reaches the work start position S (S5: Yes), the processing proceeds to step S6. The manual traveling process (S4) is continued until the work vehicle 10 reaches the work start position S (S5: No).

In step S6, the vehicle control device 11 determines whether the automatic travel start instruction is acquired from the operation terminal 20. For example, when the operator depresses the start button on the operation terminal 20, the operation terminal 20 outputs the automatic travel start instruction (work start instruction) to the work vehicle 10. When the vehicle control device 11 acquires the automatic travel start instruction from the operation terminal 20 (S6: Yes), the processing proceeds to step S7. The vehicle control device 11 waits until the automatic travel start instruction is acquired from the operation terminal 20 (S6: No).

In step S7, the vehicle control device 11 starts automatic travel. For example, when the vehicle control device 11 acquires the automatic travel start instruction and the route data from the operation terminal 20, the vehicle control device 11 starts the automatic travel and the spraying work along the target route R corresponding to the route data. The vehicle control device 11 stores the route data acquired from the operation terminal 20 in the storage unit 12.

Next, in step S8, the vehicle control device 11 determines whether the work (the spraying work) is completed by the work vehicle 10. The vehicle control device 11 determines that the work is completed when the position of the work vehicle 10 coincides with the work end position G. When the work is completed by the work vehicle 10 (S8: Yes), the automatic traveling process ends. The vehicle control device 11 continues the automatic travel and the spraying work until the work by the work vehicle 10 is completed (S8: No).

Here, when the work vehicle 10 completes the spraying work, if the chemical liquid needs to be replenished, the work vehicle 10 manually travels to the chemical liquid supply area AR through an operation on the manual travel operation unit 18 by the operator (see FIG. 9). In the chemical liquid supply area AR, the operator replenishes the work vehicle 10 with the chemical liquid.

As described above, the automatic traveling system 1 according to the present embodiment causes the work vehicle 10 to automatically travel according to the target route R in the work area (for example, the farm field F) and to perform a spraying work of spraying a spraying material (a chemical liquid, for example) on a spray target (the crops V, for example). The automatic traveling system 1 causes the work vehicle 10 to execute the stirring work for stirring the spraying material in the storage tank 14A. The automatic traveling system 1 causes the work vehicle 10 to start the stirring work if a predetermined condition is satisfied before the work vehicle 10 starts the automatic travel.

In the automatic traveling method according to the present embodiment, one or more processors execute causing the work vehicle 10 to automatically travel according to the target route R in the work area (the farm field F, for example), execute the spraying work of spraying a spraying material (for example, a chemical liquid) on a spray target (the crops V, for example), execute a stirring work for stirring the spraying material in the storage tank 14A, and start the stirring work if a predetermined condition is satisfied before the work vehicle 10 starts the automatic travel.

According to the above-described configuration, the chemical liquid in the storage tank 14A can be stirred before the work vehicle 10 starts the automatic travel, and thus, it is possible to avoid problems such as the concentration of the chemical liquid not being uniform and clogging of the spray nozzle for ejecting the chemical liquid. Thus, it is possible to appropriately spray the chemical liquid having a uniform concentration on the crops V immediately after the start of the automatic travel. Therefore, the work accuracy of the spraying work can be improved. Further, even if the operator forgets to give the start instruction for the stirring work, the stirring work can be automatically started at a predetermined timing.

### REFERENCE SIGNS LIST

- 1: Automatic traveling system
- 10: Work vehicle
- 11: Vehicle control device
- 111: Travel processing unit
- 112: Spraying processing unit
- 113: Stirring processing unit
- 114: Notification processing unit
- 14: Spray device
- 14A: Storage tank
- 18: Manual travel operation unit
- 19: Operation display unit (display unit)
- 20: Operation terminal
- 211: Setting processing unit
- 212: Route generation processing unit
- 213: Output processing unit
- 40: Base station
- 50: Satellite
- F: Farm field (work area)
- R: Target route
- V: Crop
- Vr: Crop row

## Claims

1. An automatic traveling method comprising causing a work vehicle to:
automatically travel according to a target route in a work area;
execute a spraying work of spraying a spraying material on a spray target;
execute a stirring work of stirring the spraying material in a storage tank; and
start the stirring work if a predetermined condition is satisfied before the work vehicle starts automatic travel.

2. The automatic traveling method according to claim 1, wherein the stirring work is started if the predetermined condition is satisfied before the work vehicle reaches a previously set automatic travel start position.

3. The automatic traveling method according to claim 1 or 2, wherein the stirring work is started if a key switch for starting an engine of the work vehicle is in an ON state.

4. The automatic traveling method according to claim 1 or 2, wherein the stirring work is started if the spraying material is supplied to the storage tank.

5. The automatic traveling method according to claim 1 or 2, wherein the stirring work is started if a power switch of a manual travel operation unit that causes the work vehicle to manually travel to the previously set automatic travel start position is in an ON state.

6. The automatic traveling method according to any one of claims 1 to 5, wherein the stirring work is started if the work vehicle is connected to an external power source.

7. The automatic traveling method according to any one of claims 1 to 6, wherein the stirring work is continued if the work vehicle detects an obstacle and stops after the stirring work is started.

8. The automatic traveling method according to any one of claims 1 to 7, wherein a work status of the stirring work is displayed on at least one of a display unit mounted in the work vehicle and an operation terminal communicable with the work vehicle.

9. An automatic traveling system comprising:
a travel processing unit that causes a work vehicle to automatically travel according to a target route in a work area;
a spraying processing unit that causes the work vehicle to execute a spraying work of spraying a spraying material on a spray target; and
a stirring processing unit that causes the work vehicle to execute a stirring work of stirring the spraying material in a storage tank, wherein
the stirring processing unit causes the work vehicle to start the stirring work if a predetermined condition is satisfied before the work vehicle starts automatic travel.

10. An automatic traveling program for causing one or more processors to execute causing a work vehicle to:
automatically travel according to a target route in a work area;
execute a spraying work of spraying a spraying material on a spray target;
execute a stirring work of stirring the spraying material in a storage tank; and
start the stirring work if a predetermined condition is satisfied before the work vehicle starts automatic travel.
